# EUROPEAN PATENT APPLICATION

(11) **EP 4 395 410 A1**
(43) Date of publication of application: **03.07.2024**
(21) Application number: 22878802.2
(22) Date of filing: 27.09.2022
(51) Int. Cl.: H04W 28/18, H04W 76/15, H04W 88/02, H04W 84/12

(54) **ELECTRONIC DEVICE FOR PERFORMING TWT ON BASIS OF INFORMATION RELATED TO BEACON, AND OPERATING METHOD OF ELECTRONIC DEVICE**

(30) Priority: 08.10.2021 KR 20210134000
(71) Applicant: Samsung Electronics Co., Ltd., Suwon-si, Gyeonggi-do 16677 (KR)
(72) Inventor: CHOI, Junsu, Suwon-si, Gyeonggi-do 16677 (KR); KIM, Sunghwan, Suwon-si, Gyeonggi-do 16677 (KR); MIN, Hyunkee, Suwon-si, Gyeonggi-do 16677 (KR); LEE, Sunkee, Suwon-si, Gyeonggi-do 16677 (KR); LIM, Junhak, Suwon-si, Gyeonggi-do 16677 (KR); JEONG, Kiyeong, Suwon-si, Gyeonggi-do 16677 (KR); CHOI, Hyeonu, Suwon-si, Gyeonggi-do 16677 (KR)
(74) Representative: HGF
(86) International application number: PCT/KR2022/014452
(87) International publication number: WO 2023/058981

(57) **Abstract**

In an electronic device and an operating method of the electronic device, according to various embodiments, the electronic device comprises: a communication circuit for transmitting or receiving data through a plurality of links generated between an external electronic device and the electronic device; and a processor operatively connected to the communication circuit, wherein the processor may be configured to: receive, from the external electronic device, a signal including a target beacon transmission time (TBTT) of a beacon to be received through at least one link from among the plurality of links, and interval information of the beacon; generate and/or change a target wake time (TWT) parameter on the basis of the TBTT and/or the interval; and control the communication circuit on the basis of the generated and/or changed TWT parameter. Other various embodiments are possible.

## Description

### [Technical Field]

Various embodiments of the disclosure relate to an electronic device and operation method thereof and, more particularly, to a technique for determining and/or changing TWT parameters based on information related to a beacon.

### [Background Art]

With the widespread use of various electronic devices, improvements in the speed of wireless communication that various electronic devices can use have been achieved. Among wireless communications supported by recent electronic devices, IEE 802.11 WLAN (or Wi-Fi) is a standard for implementing highspeed wireless connections on various electronic devices. The first implemented Wi-Fi could support transmission speeds of up to 1 to 9 Mbps, but Wi-Fi 6 technology (or IEEE 802.11ax) can support transmission speeds of up to about 10 Gbps.

Electronic devices can support various services utilizing relatively large capacity data (e.g., UHD quality video streaming service, augmented reality (AR) service, virtual reality (VR) service, and/or mixed reality (MR) service) through wireless communication that supports high transmission rates.

The IEEE 802.11ax technical standard has introduced a target wake time (TWT) function to improve battery performance of various electronic devices connected to an access point (AP). The TWT function may be a function of transmitting or receiving data for a specified time (target wake time duration) between an electronic device and an AP. The electronic device may transmit or receive data for the specified time and may not transmit or receive data for a time other than the specified time. The TWT function is attracting attention as a function that can reduce power consumption that occurs in short-range wireless communication between electronic devices.

In addition, the IEEE 802.11be (or Wi-Fi 7) technical standard plans to introduce a technique for supporting multi-link operation (MLO) to improve the speed of data transmission and reception and reduce delay time. As electronic devices supporting multi-link operations can transmit or receive data through multiple links, they are expected to achieve relatively high transmission speeds and low delay times.

### [Disclosure of Invention]

### [Technical Problem]

For a specified time (or TWT duration), the electronic device may activate a communication circuit supporting short-range wireless communication, and may receive data transmitted by an external electronic device (or AP) or transmit data to the external electronic device. For a time other than the specified time, the electronic device may deactivate the communication circuit.

To perform short-range wireless communication, the electronic device must receive at least some of the beacons periodically transmitted by the external electronic device. However, if the time point at which the external electronic device periodically transmits a beacon and the specified time (or TWT duration) at which the electronic device activates the communication circuit do not match at least partially, the electronic device may fail to receive a beacon.

To receive a beacon, the electronic device may activate the communication circuit at a time other than the specified time. However, as the activation time of the communication circuit increases, the power consumption of the electronic device may increase.

The electronic device according to various embodiments may generate and/or change TWT parameters based on the beacon reception periodicity.

### [Solution to Problem]

According to various embodiments of the disclosure, an electronic device may include: a communication circuit that transmits or receives data through multiple links established between an external electronic device and the electronic device; and a processor operably connected to the communication circuit, wherein the processor may be configured to receive a signal including information about a target beacon transmission time (TBTT) of a beacon to be received through at least one link among the multiple links and a beacon interval from the external electronic device, generate and/or change target wake time (TWT) parameters based on the TBTT and/or the beacon interval, and control the communication circuit based on the generated and/or changed TWT parameters.

According to various embodiments of the disclosure, an electronic device may include: a communication circuit that transmits or receives data through multiple links established between an external electronic device and the electronic device; and a processor operably connected to the communication circuit, wherein the processor may be configured to receive TWT parameters related to a target wake time (TWT) of the external electronic device from the external electronic device through at least one link among the multiple links, identify a target beacon transmission time (TBTT) of a beacon to be received through at least one link among the multiple links and beacon interval information, generate and/or change the received TWT parameters based on the TBTT and/or the beacon interval, and control the communication circuit to transmit the generated and/or changed TWT parameters to the external electronic device.

According to various embodiments of the disclosure, an operation method of an electronic device may include: receiving, from an external electronic device, a signal including information about a target beacon transmission time (TBTT) of a beacon to be received through at least one link among multiple links established between the external electronic device and the electronic device and a beacon transmission interval; generating and/or changing target wake time (TWT) parameters based on the TBTT and/or the beacon transmission interval; and receiving or transmitting data from or to the external electronic device based on the generated and/or changed TWT parameters.

### [Advantageous Effects of Invention]

In the electronic device and operation method thereof according to various embodiments of the disclosure, TWT parameters may be generated and/or changed on the basis of a beacon reception periodicity determined based on a target beacon transmission time (TBTT) and/or a beacon transmission periodicity included in the information related to the beacon. The electronic device may generate and/or change the TWT parameters so that beacons can be received during the period (or TWT duration) during which the communication circuit is activated. Thereby, there is no need to activate the communication circuit for a period other than the TWT duration to receive a beacon, and power consumption can be reduced.

In the electronic device and operation method thereof according to various embodiments of the disclosure, the TBTTs of beacons transmitted through multiple links can be set differently. Therefore, even if the number of electronic devices connected to the external electronic device increases, as the situation where the TWT durations of electronic devices overlap can be avoided as much as possible, the contention level can be reduced, and smooth short-range wireless communication can be implemented.

### [Brief Description of Drawings]

FIG. 1 is a block diagram of an electronic device according to various embodiments of the disclosure.
FIG. 2 is a block diagram of programs according to various embodiments.
FIG. 3 is a diagram illustrating an embodiment in which an electronic device and an external electronic device function in multi-link operation (MLO) according to various embodiments of the disclosure.
FIG. 4A is a diagram illustrating an embodiment in which the electronic device controls a communication circuit based on a target wake time (TWT) according to various embodiments of the disclosure.
FIG. 4B is a diagram illustrating an embodiment in which the electronic device receives a beacon signal broadcast by the external electronic device according to various embodiments of the disclosure.
FIG. 4C is a diagram illustrating an embodiment in which the electronic device controls a communication circuit based on the TWT and target beacon transmission time (TBTT) according to various embodiments of the disclosure.
FIG. 5 is a block diagram of an electronic device according to various embodiments of the disclosure.
FIG. 6 is a block diagram of an external electronic device according to various embodiments of the disclosure.
FIG. 7 is a diagram illustrating an embodiment in which the electronic device generates and/or changes TWT parameters according to various embodiments of the disclosure.
FIG. 8 is a sequence diagram illustrating an operation method of the electronic device according to various embodiments of the disclosure.
FIG. 9 is a sequence diagram illustrating an operation method of the electronic device according to various embodiments of the disclosure.
FIG. 10 is an operational flowchart illustrating an operation method of the electronic device according to various embodiments of the disclosure.

### [Mode for the Invention]

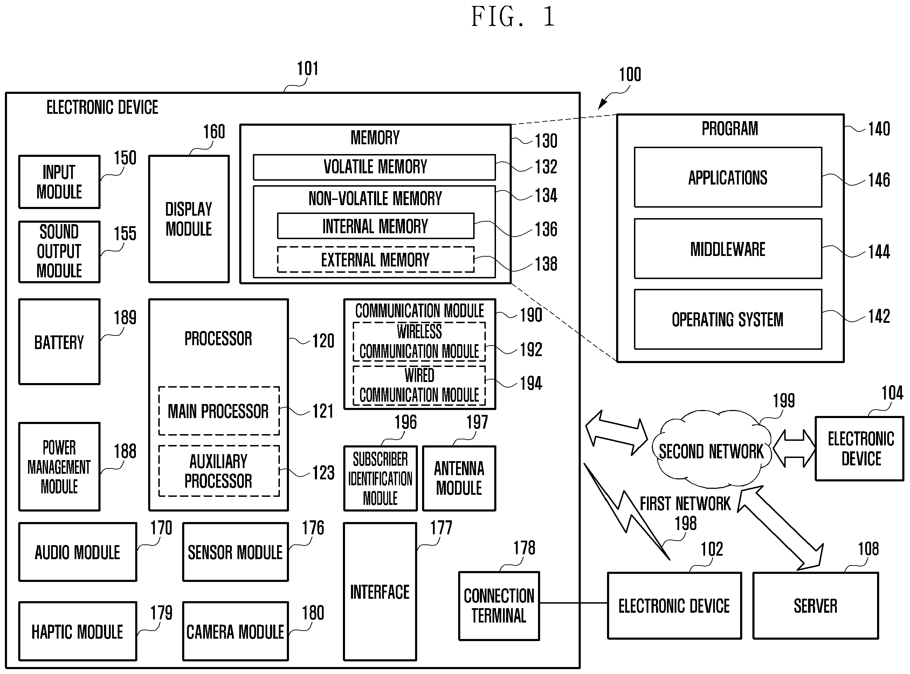

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mm Wave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

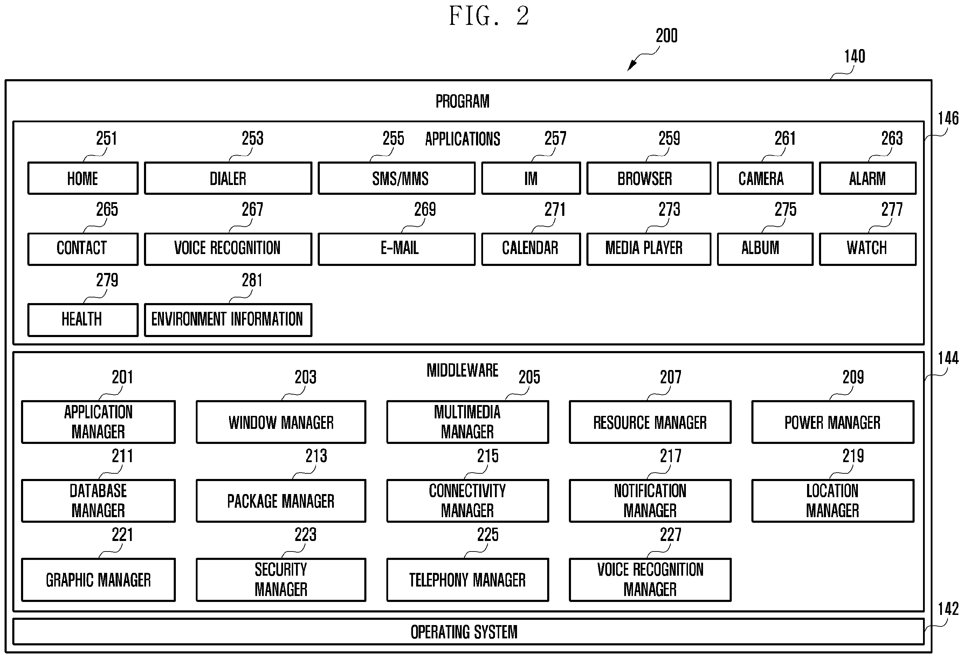

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

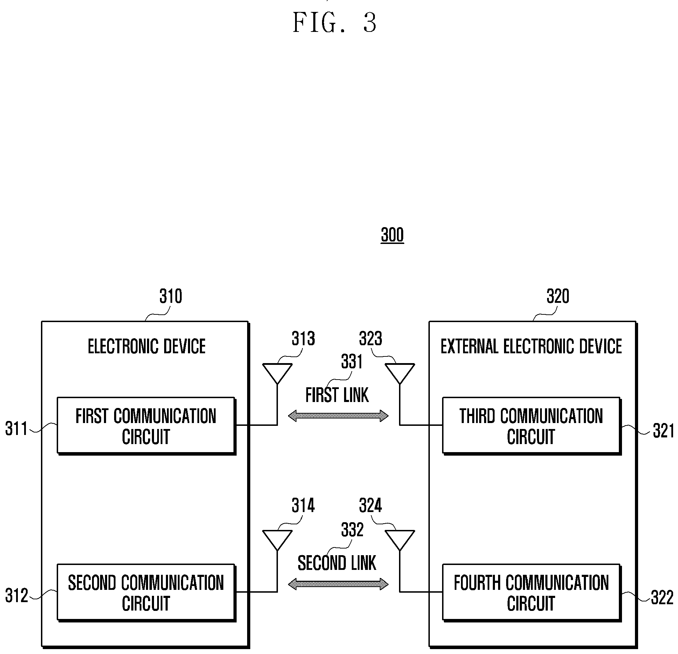

FIG. 3 is a diagram illustrating an embodiment in which an electronic device and an access point (AP) function in multi-link operation (MLO) according to various embodiments of the disclosure.

With reference to FIG. 3, the wireless LAN system 300 may include an electronic device 310 and/or an external electronic device 320. According to an embodiment, the electronic device 310 may perform wireless communication with the external electronic device 320 through short-range wireless communication. Wireless communication may refer to various communication methods that both the electronic device 310 and/or the external electronic device 320 can support. For example, wireless communication may be Wi-Fi. The external electronic device 320 may serve as a base station that provides wireless communication to at least one electronic device 310 located inside the communication radius of the wireless LAN system 300. For example, the external electronic device 320 may include an access point (AP) of IEEE 802.11. The electronic device 310 may include a station (STA) of IEEE 802.11.

According to various embodiments of the disclosure, the electronic device 310 and/or the external electronic device 320 may support multi-link operation (MLO). The multi-link operation may be an operation mode in which data is transmitted or received through plural links (e.g., first link 331 and second link 332). The multi-link operation is an operation mode to be introduced in IEEE 802.11be, and may be an operation mode in which data is transmitted or received through plural links based on plural bands or channels.

According to various embodiments of the disclosure, the electronic device 310 may include a plurality of communication circuits (e.g., first communication circuit 311 and/or second communication circuit 312) to support multi-link operation. The first communication circuit 311 may transmit data to the external electronic device 320 through a first link 331 or receive data transmitted by the external electronic device 320 through the first link 331. The first communication circuit 311 may output or receive a signal of a frequency band corresponding to the first link 331 through a first antenna 313. The second communication circuit 312 may transmit data to the external electronic device 320 through a second link 332 or receive data transmitted by the external electronic device 320 through the second link 332. The second communication circuit 312 may output or receive a signal of a frequency band corresponding to the second link 332 through a second antenna 314. The first communication circuit 311 and/or the second communication circuit 312 may be integrated to be implemented as one communication circuit.

According to various embodiments of the disclosure, the external electronic device 320 may include a plurality of communication circuits (e.g., third communication circuit 321 and/or fourth communication circuit 322) to support multi-link operation. The third communication circuit 321 may transmit data to the electronic device 310 through the first link 331 or receive data transmitted by the electronic device 310 through the first link 331. The third communication circuit 321 may output or receive a signal of a frequency band corresponding to the first link 331 through a third antenna 323. The fourth communication circuit 322 may transmit data to the electronic device 310 through the second link 332 or receive data transmitted by the electronic device 310 through the second link 332. The fourth communication circuit 322 may output or receive a signal of a frequency band corresponding to the second link 332 through a fourth antenna 324. The third communication circuit 321 and/or the fourth communication circuit 322 may be integrated to be implemented as one communication circuit.

According to various embodiments of the disclosure, the frequency band of the first link 331 and the frequency band of the second link 333 may be different from each other. For example, the frequency band of the first link 331 may be 2.5 GHz, and the frequency band of the second link 332 may be 5 GHz or 6 GHz.

According to various embodiments of the disclosure, a different electronic device other than the electronic device 310 may also use the first link 331 and the second link 332. To prevent a situation in which the electronic device 310 and another electronic device transmit or receive data through the same link at the same time, the electronic device 310 may support a carrier sense multiple access with collision avoidance (CSMA/CA) method. The CSMA/CA method may be a scheme for performing data transmission when a specific link is in idle state. The electronic device 310 supporting CSMA/CA may identify whether another electronic device transmits data through a specific link, and, upon sensing data transmission, may wait without transmitting data through the specific link. Upon confirming that another electronic device does not transmit data through the specific link, the electronic device 310 supporting CSMA/CA may transmit data through the specific link according to a specified scheme (e.g., activating a timer and transmitting data when the timer expires). In this way, the electronic device 310 may perform data transmission and/or reception through a specific link without colliding with another electronic device.

According to various embodiments of the disclosure, the first link 331 and/or the second link 332 supported by the multi-link operation may independently support CSMA/CA.

The electronic device 310 supporting CSMA/CA may identify whether a specific link is in an idle state before transmitting data. The electronic device 310 may transmit data through a specific link in idle state.

The electronic device 310 may identify whether the first link 331 is in idle state based on information related to the idle state of the first link 331 included in data transmitted by the external electronic device 320. The information related to the idle state of the first link 331 may include a CCA status field (clear channel assessment field) and/or a network allocation vector (NAV) configuration field. The information related to the idle state of the first link 331 may be included in a ready to send (RTS) message for requesting data transmission through the first link 331, or in a clear to send (CTS) message indicating that data transmission is possible through the first link 331. The electronic device 310 may identify whether a specific link is in idle state by referring to the CCA status field and/or the NAV configuration field. The electronic device 310 may determine whether the first link 331 is physically idle by referring to the CCA status field, and determine whether the first link 331 is logically idle by referring to the NAV configuration field. In response to confirming that the first link 331 is in idle state, the electronic device 310 may activate a timer, and may transmit data to the external electronic device 320 through the first link 331 in response to expiration of the timer after a specified time.

The electronic device 310 may identify whether the second link 332 is in idle state based on information related to the idle state of the second link 332 included in data transmitted by the external electronic device 320. The information related to the idle state of the second link 332 may include a CCA status field (clear channel assessment field) and/or a network allocation vector (NAV) configuration field. The information related to the idle state of the second link 332 may be included in a ready to send (RTS) message for requesting data transmission through the second link 332, or in a clear to send (CTS) message indicating that data transmission is possible through the second link 332. The electronic device 310 may identify whether a specific link is in idle state by referring to the CCA status field and/or the NAV configuration field. The electronic device 310 may determine whether the second link 332 is physically idle by referring to the CCA status field, and determine whether the second link 332 is logically idle by referring to the NAV configuration field. In response to confirming that a specific link is in idle state, the electronic device 310 may activate a timer, and may transmit data to the external electronic device 320 through the second link 332 in response to expiration of the timer after a specified time.

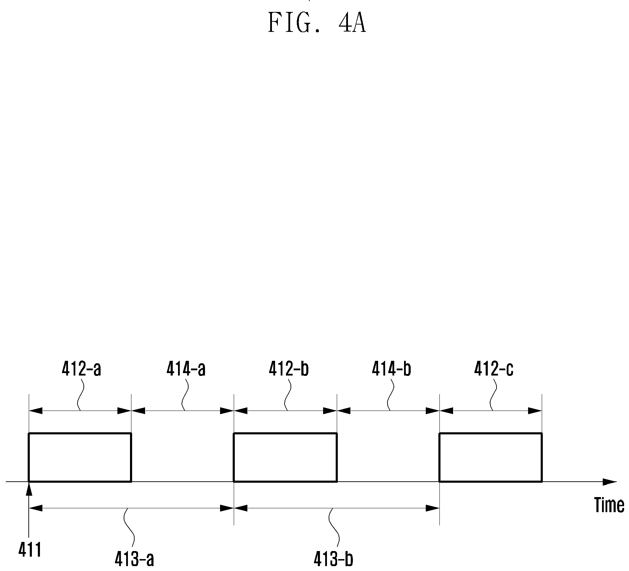

FIG. 4A is a diagram illustrating an embodiment in which the electronic device controls a communication circuit based on a target wake time (TWT) according to various embodiments of the disclosure.

The electronic device (e.g., electronic device 310 in FIG. 3) may support target wake time (TWT) operation in which data is received and/or transmitted for a specified time and data is not received and/or transmitted for another time.

The TWT is a function proposed in IEEE 802.11ax (or Wi-Fi 6). An electronic device supporting the TWT may transmit and/or receive data through short-range wireless communication for a specified time, and place the communication circuit supporting short-range wireless communication in an idle state (or, inactive state) for a time other than the specified time, so that power consumption can be reduced in performing short-range wireless communication.

While being connected to the external electronic device 320, the electronic device 310 may activate the TWT function and set TWT parameters through negotiation with the external electronic device 320. TWT parameters may be parameters required to perform the TWT function. According to an embodiment, the TWT parameters may include at least one of target wake time 411 indicating the time point of activating data transmission and/or reception, TWT duration (or TWT service period (SP)) 412-a, 412-b or 412-c indicating a duration in which data transmission and/or reception can be performed, and/or TWT wake interval 413-a or 413-b indicating the interval between two consecutive time points of activating data transmission and/or reception.

The electronic device 310 may transmit, to the external electronic device 320, the TWT parameters generated during the negotiation process related to activation of the TWT function. The external electronic device 320 may transmit data to the electronic device 310 for a specific duration (e.g., 412-a, 412-b, and/or 412-c) based on the TWT parameters.

The electronic device 310 may transmit data to the external electronic device 320 for a specific duration (e.g., 412-a, 412-b, and/or 412-c). The electronic device 310 may activate the communication circuit (e.g., first communication circuit 311 and/or second communication circuit 312 in FIG. 3) for a specific duration (e.g., 412-a, 412-b, and/or 412-c) and deactivate the communication circuit 311 or 312 for another duration (e.g., 414-a and/or 414-b), thereby reducing power consumption due to the communication circuit 311 or 312.

The electronic device 310 supporting data transmission and/or reception through plural links (e.g., first link 331 and/or second link 332 in FIG. 3) may configure the TWT function for each link. According to an embodiment, the electronic device 310 may transmit and/or receive data by using all of the plural links for the same time while the TWT function of the plural links is activated.

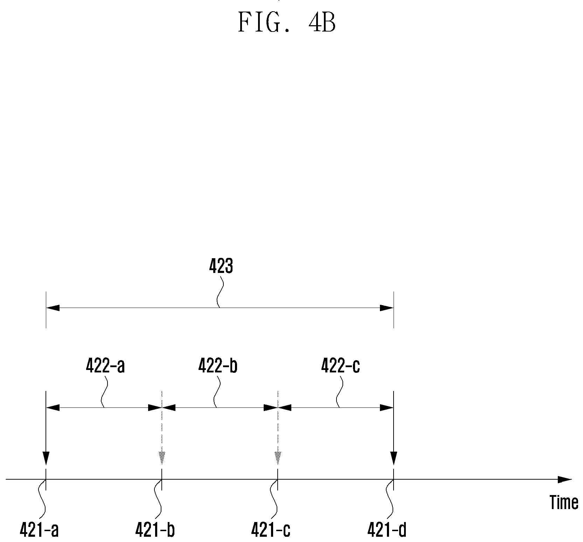

FIG. 4B is a diagram illustrating an embodiment in which the electronic device receives a beacon signal broadcast by the external electronic device according to various embodiments of the disclosure.

The external electronic device (e.g., external electronic device 320 in FIG. 3) may transmit (or, broadcast) beacons through plural links (e.g., first link 331 and/or second link 332 in FIG. 3) established between the electronic device (e.g., electronic device 310 in FIG. 3) and the external electronic device 320. Beacons may include various information for performing short-range wireless communication between the electronic device 310 and the external electronic device 320.

According to an embodiment, beacons may include information necessary to perform time synchronization between the electronic device 310 and the external electronic device 320. The electronic device 310 may perform time synchronization with the external electronic device 320 based on a beacon.

According to an embodiment, a beacon may include information indicating the presence of data (e.g., IP data) to be transmitted by the external electronic device 320, and/or a traffic indication map (TIM) being information indicating the destination of data (e.g., electronic device 310). The electronic device 310 may identify whether there is data to be transmitted by the external electronic device 320 based on a received beacon, and may determine whether to activate the communication circuit (e.g., first communication circuit 311 and/or second communication circuit 312 in FIG. 3) based on the presence of data.

According to an embodiment, a beacon may include information indicating the target beacon transmission time (TBTT) 421-a, 421-b, 421-c, 421-d of a next beacon to be transmitted, and/or information indicating the beacon transmission periodicity 422-a, 422-b, 422-c. The electronic device 310 may identify (or determine) the time at which the external electronic device 320 will transmit a beacon based on a received beacon, and may determine the activation time of the communication circuits 311 and 312 based on the beacon transmission time.

According to an embodiment, the electronic device 310 may not activate the communication circuits 311 and 312 to receive all beacons transmitted by the external electronic device 320, but may activate the communication circuits 311 and 312 to receive only some of the beacons transmitted by the external electronic device 320. The electronic device 310 may identify the beacon transmission periodicity 422-a, 422-b, 422-c included in a beacon, and may set a beacon reception periodicity 423 to be greater than the beacon transmission periodicity. The electronic device 310 may control the communication circuits 311 and 312 based on the beacon reception periodicity 423. The electronic device 310 may place the communication circuits 311 and 312 in a deactivated state for a period of time equal to the beacon reception periodicity 423 from the time point when the communication circuits 311 and 312 are activated. The electronic device 310 may set an activation periodicity for the communication circuits 311 and 312 to have the same size as the beacon reception periodicity 423. The electronic device 310 may activate the communication circuits 311 and 312 at the start point of the beacon reception periodicity 423 (or, at a specified time before the start point), and may control the communication circuits 311 and 312 to receive a beacon. For example, the electronic device 310 may set a multiple (e.g., 3 times) of the beacon transmission periodicity (e.g., 10 ms) to be the beacon reception periodicity (e.g., 30 ms). The electronic device 310 may activate the communication circuits 311 and 312 according to the set reception periodicity.

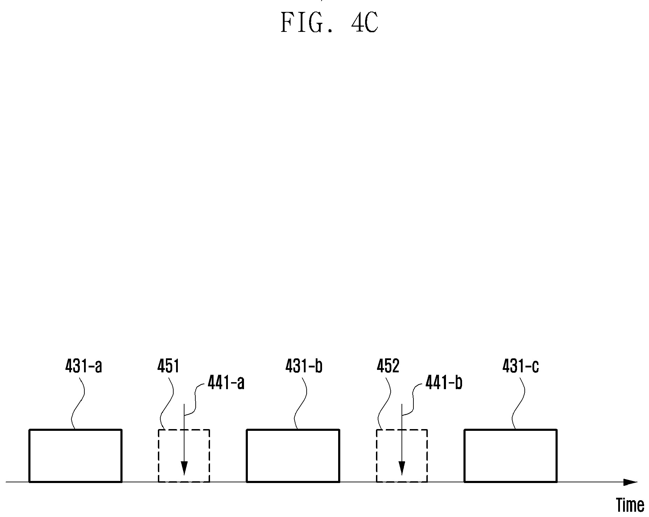

FIG. 4C is a diagram illustrating an embodiment in which the electronic device controls a communication circuit based on the TWT and target beacon transmission time (TBTT) according to various embodiments of the disclosure.

The electronic device (e.g., electronic device 310 in FIG. 3) may support the target wake time (TWT) by receiving and/or transmitting data for a specified time (e.g., 431-a, 431-b, 431-c) and not receiving and/or transmitting data for another time. The electronic device 310 may activate the communication circuit (e.g., first communication circuit 311 and/or second communication circuit 312 in FIG. 3) to transmit or receive data through short-range wireless communication for the specified time 431-a, 431-b, 431-c. Activation of the communication circuit may be controlled by TWT parameters. The electronic device 310 may determine the activation time, activation duration, and deactivation time of the communication circuits 311 and 312 based on the TWT parameters.

The electronic device 310 may activate the communication circuits 311 and 312 to receive beacons transmitted through at least one of the plural links (e.g. first link 331 and/or second link 332 in FIG. 3). Activation of the communication circuits 311 and 312 may be controlled based on a beacon transmission time (TBTT) and/or beacon transmission periodicity included in a beacon. The electronic device 310 may determine the activation time, activation duration, and deactivation time of the communication circuits 311 and 312 based on the TBTT and/or the transmission periodicity (or, reception periodicity).

A beacon reception point may be not included in the TWT duration. If a beacon reception point is not included in the TWT duration, the electronic device 310 may have to activate the communication circuits 311 and 312 to receive a beacon in a period other than the TWT duration.

With reference to FIG. 4C, the electronic device 310 may activate the communication circuits 311 and 312 in the TWT duration 431-a, and switch the communication circuits 311 and 312 to the deactivated state when the TWT duration 431-a ends. To receive a beacon 441-a, the electronic device 310 may switch the communication circuits 311 and 312 back to the activated state for a period 451 before the next TWT duration 431-b begins. The electronic device 310 may activate the communication circuits 311 and 312 in the TWT duration 431-b, and switch the communication circuits 311 and 312 to the deactivated state when the TWT duration 431-b ends. To receive a beacon 441-b, the electronic device 310 may switch the communication circuits 311 and 312 back to the activated state for a period 452 before the next TWT duration 431-c begins.

To receive a beacon, the electronic device 310 may switch the communication circuits 311 and 312 to the activated state even in a period other than the TWT duration, so that power consumption may increase due to activation of the communication circuits 311 and 312. Switching the communication circuits 311 and 312 to the activated state to receive a beacon signal may reduce the effectiveness of the TWT function.

Simply, when setting the TWT duration, if the TWT duration is set to include the reception point of the beacon (e.g., increasing the TWT duration), the contention level caused by other external electronic devices (e.g., electronic device 104 in FIG. 1) connected to the external electronic device 320 may increase.

Next, a description will be given of an embodiment that prevents activation of the communication circuits 311 and 312 for receiving beacons while preventing an increase in contention level by another external electronic device 104 connected to the external electronic device 320.

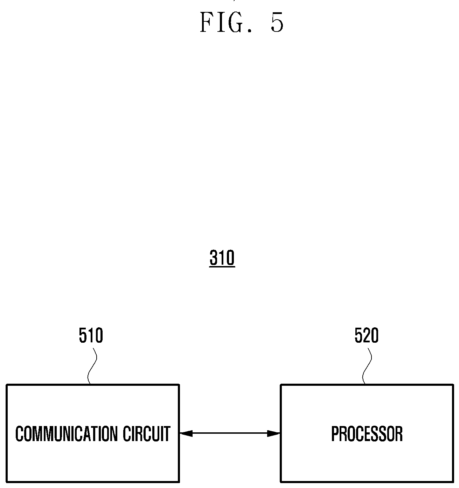

FIG. 5 is a block diagram of an electronic device according to various embodiments of the disclosure.

According to various embodiments of the disclosure, the electronic device (e.g., electronic device 310 in FIG. 3) may include a communication circuit 510 (e.g., first communication circuit 311 or second communication circuit 312 in FIG. 4B) and/or a processor 520 (e.g., processor 120 in FIG. 1).

The communication circuit 510 may include various circuit structures used for modulating and/or demodulating signals in the electronic device 310. For example, the communication circuit 510 may modulate a baseband signal into a radio frequency (RF) band signal to be output through an antenna (not shown), or may demodulate an RF band signal received through an antenna into a baseband signal and transfer it to the processor 520.

The communication circuit 510 may transmit multiple packets to the external electronic device (e.g., external electronic device 320 in FIG. 3) through a first link (e.g., first link 331 in FIG. 3), or may receive data transmitted by the external electronic device 320 through the first link 331. The communication circuit 510 may transmit packets to the external electronic device (e.g., external electronic device 320 in FIG. 3) through a second link (e.g., second link 332 in FIG. 3), or may receive packets transmitted by the external electronic device 320 through the second link 332. The communication circuit 510 may output or receive a signal of a frequency band corresponding to the first link 331 through an antenna (not shown), and may output or receive a signal of a frequency band corresponding to the second link 332 through an antenna (not shown).

The frequency band of the first link 331 and the frequency band of the second link 333 may be different from each other. For example, the frequency band of the first link 331 may be 2.5 GHz, and the frequency band of the second link 332 may be 5 GHz or 6 GHz.

The processor 520 may perform an operation of receiving data transmitted by an application processor (e.g., processor 120 in FIG. 1) and generating a packet for transmitting the received data to the external electronic device 320. The processor 520 may be defined as a communication processor included in a communication module (e.g., wireless communication module 192 in FIG. 1). According to an embodiment, the processor 520 may perform channel coding based on data transmitted by an application processor (e.g., application processor 120 in FIG. 1) so as to generate a packet, identify whether there is an error in at least a portion of data transmitted by the external electronic device 320, or perform, when an error has occurred, an operation to recover the error (e.g., hybrid automatic repeat request (HARQ)).

The processor 520 may be operably connected to the communication circuit 510 and control the operation of the communication circuit 510. The processor 520 may receive data transmitted by the application processor 120 and select a link to be used for transmitting or receiving a packet corresponding to the data based on the features of the service included in the data.

To support the target wake time (TWT) function, the processor 520 may perform TWT negotiation with the external electronic device (e.g., external electronic device 320 in FIG. 3). The processor 520 may generate TWT parameters during the TWT negotiation process. According to an embodiment, the processor 520 may generate TWT parameters based on the state of the electronic device 310. The state of the electronic device 310 may include at least one of the size of data (or traffic) to be transmitted or received by the electronic device 310, quality-of service (QoS) requirements, or a contention level of at least one link among the multiple links. The processor 520 may generate TWT parameters including at least one of target wake time (e.g., 411 in FIG. 4A) indicating the time point of activating data transmission and/or reception, TWT duration (e.g., 412-a, 412-b, 412-c in FIG. 4A) indicating a period in which data transmission and/or reception can be performed, and/or TWT wake interval (e.g., 413-a, 413-b in FIG. 4A) indicating the interval between two consecutive time points of activating data transmission and/or reception.

For example, to provide a service that requires relatively high-capacity data transmission and relatively low latency, the processor 520 may generate a TWT duration with a relatively long length and/or a TWT wake interval with a relatively short length. Or, to provide a service that does not require relatively high-capacity data transmission and relatively low latency, the processor 520 may generate a TWT duration with a relatively short length and/or a TWT wake interval with a relatively long length.

The processor 520 may receive a beacon broadcast (or, transmitted) by the external electronic device 320 before or after generating TWT parameters. The processor 520 may receive a beacon through at least one link (e.g., second link 332) among the plural links 331 and 332.

According to an embodiment, a beacon may include information necessary to achieve time synchronization between the electronic device 310 and the external electronic device 320. The processor 520 may perform time synchronization with the external electronic device 320 based on beacons.

According to an embodiment, a beacon may include information indicating the presence of data (e.g., IP data) to be transmitted by the external electronic device 320, and/or a traffic indication map (TIM) being information indicating the destination of data (e.g., electronic device 310). The processor 520 may identify whether there is data to be transmitted by the external electronic device 320 based on a received beacon, and may determine whether to activate the communication circuit 510 based on the presence of data.

According to various embodiments of the disclosure, beacons may be broadcast (or transmitted) through at least some or all of the plural links. A beacon may include not only information related to a specific link (e.g., first link 331) carrying the beacon but also information related to another link (e.g., second link 332).

For example, a beacon transmitted through the first link 331 may include time synchronization information related to the first link 331 and time synchronization information related to the second link 332. A beacon transmitted through the second link 332 may include time synchronization information related to the first link 331 and time synchronization information related to the second link 332.

As another example, a beacon transmitted through the first link 331 may include information indicating presence of data to be transmitted through the first link 331 and information indicating presence of data to be transmitted through the second link 332.

The processor 520 may receive beacons broadcast through at least some of the plural links and execute settings of other links through which beacons have not been received based on the received beacons.

According to an embodiment, a beacon may include information indicating the target beacon transmission time (TBTT) (e.g., 421-a, 421-b, 421-c, 421-d inFIG. 4B) of a next beacon to be transmitted, and/or information indicating the beacon transmission periodicity (e.g., 422-a, 422-b, 422-c in FIG. 4B).

The processor 520 may modify (or change) the generated TWT parameters based on beacon-related information included in a beacon. The processor 520 may change the TWT parameters so that the TWT duration includes the TBTT of a beacon transmitted through at least one link (e.g., second link 332) among the plural links 331 and 332. Alternatively, in generating TWT parameters, the processor 520 may generate the TWT parameters based on information related to the beacon.

As part of the operation of generating (or changing) the TWT parameters, the processor 520 may set the TWT wake interval included in the TWT parameters to one of the divisors of the beacon reception periodicity. When setting the TWT wake interval (e.g., 20ms) to one of the divisors of the beacon reception periodicity (e.g., 160ms), the processor 520 may receive a beacon in at least one TWT duration among plural TWT durations (e.g., 8 TWT durations). Hence, the electronic device 310 does not have to switch the communication circuit 510 to the activated state for a specified time other than the TWT duration to receive a beacon.

The processor 520 may select a divisor with the smallest difference from the TWT wake interval among the divisors of the beacon reception periodicity, and set the selected divisor as the TWT wake interval.

The processor 520 may select one of the divisors according to the characteristics of the service used by the electronic device 310 (e.g., a service requiring low latency, or a service requiring transmission or reception of relatively large amount of data), and set the selected divisor as the TWT wake interval.

As part of the operation of generating (or changing) the TWT parameters, the processor 520 may set the start time of the TWT duration included in the TWT parameters based on the TBTT included in a beacon. The processor 520 may set the start time of the TWT duration so that a beacon can be received within the TWT duration based on the start time of the TWT duration and the length of the TWT duration.

Taking into account the delay time in reception of a beacon resulting from the link through which the beacon is transmitted being occupied by another external electronic device (e.g., electronic device 104 in FIG. 1), the processor 520 may set the start time of the TWT duration and/or the TWT wake interval so that the end time of the TWT duration and the TBTT are greater than or equal to (or exceed) a specified length.

The processor 520 may control the communication circuit 510 to transmit the TWT parameters changed in the above-described way to the external electronic device 320. The processor 520 may transmit a signal including the changed TWT parameters through a link used for beacon transmission or a link other than the link used for beacon transmission.

The processor 520 may perform TWT negotiation for other links based on the TWT parameters corresponding to the link used for beacon transmission. For TWT negotiation as to other links, a signal including changed TWT parameters may include information indicating whether the changed TWT parameters apply to all links or information indicating the link to which the changed TWT parameters apply.

The processor 520 may control the communication circuit 510 based on the changed TWT parameters. The processor 520 may control the communication circuit 510 so that the communication circuit 510 is activated before the start time of the TWT duration included in the changed TWT parameters. The processor 520 may control the communication circuit 510 so that the communication circuit 510 is activated every TWT interval included in the changed TWT parameters.

The external electronic device 320 may set different TBTTs for the plural links. The electronic device 310 may configure the TWT parameters so that the TBTT of a beacon transmitted through a specific link (e.g., second link 332) is included in the TWT duration, and a different electronic device 104 connected to the external electronic device 320 may configure the TWT parameters so that the TBTT of a beacon transmitted through another link (e.g., first link 331) is included in the TWT duration. Through the above scheme, the electronic device 310 and/or another electronic device 104 connected to the external electronic device 320 can transmit or receive data to or from the external electronic device 320 at different times, so that the contention level can be lowered.

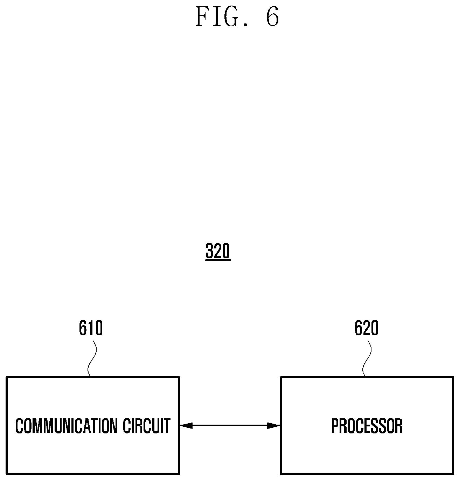

FIG. 6 is a block diagram of an external electronic device according to various embodiments of the disclosure.

According to various embodiments of the disclosure, the external electronic device (e.g., external electronic device 320 in FIG. 3) may include a communication circuit 610 (e.g., third communication circuit 321 or fourth communication circuit in FIG. 3) and/or a processor 620 (e.g., processor 120 in FIG. 1).

To support multi-link operation, the external electronic device 320 may include the communication circuit 610, which is implemented as one communication circuit composed of a first communication circuit (e.g., third communication circuit 321 in FIG. 3) and a second communication circuit (e.g., fourth communication circuit 322 in FIG. 3).

The communication circuit 610 may transmit multiple packets to the electronic device (e.g., electronic device 310 in FIG. 5) through a first link (e.g., first link 331 in FIG. 3), or may receive data transmitted by the electronic device 310 through the first link 331. The communication circuit 510 may transmit packets to the electronic device 310 through a second link (e.g., second link 332 in FIG. 3), or may receive data transmitted by the electronic device 310 through the second link 332. The communication circuit 510 may output or receive a signal of a frequency band corresponding to the first link 331 through an antenna (not shown), and may output or receive a signal of a frequency band corresponding to the second link 332 through an antenna (not shown).

According to various embodiments of the disclosure, the frequency band of the first link 331 and the frequency band of the second link 333 may be different from each other. For example, the frequency band of the first link 331 may be 2.5 GHz, and the frequency band of the second link 332 may be 5 GHz or 6 GHz.

The processor 620 may be operably connected to the communication circuit 610 and control the operation of the communication circuit 610.

The processor 620 may set different TBTTs for the plural links. For example, the TBTT of a beacon transmitted through the first link 331 may be different from the TBTT of a beacon transmitted through the second link 332. By setting different TBTTs for beacons transmitted through different links, the TWT durations of the electronic device 310 and another electronic device 104 connected to the external electronic device 320 can be set so that they do not overlap, which may lower the contention level.

To support the target wake time (TWT) function, the processor 620 may perform TWT negotiation with the electronic device 310. The processor 620 may receive TWT parameters generated by the electronic device 310 during the TWT negotiation process. According to an embodiment, the electronic device 310 may generate TWT parameters based on the state of the electronic device 310. The state of the electronic device 310 may include at least one of the size of data (or traffic) to be transmitted or received by the electronic device 310, quality-of service (QoS) requirements, or a contention level of at least one link among the multiple links. The electronic device 310 may generate TWT parameters including at least one of target wake time (e.g., 411 in FIG. 4A) indicating the time point of activating data transmission and/or receptiov, TWT duration (e.g., 412-a, 412-b, 412-c in FIG. 4A) indicating a period in which data transmission and/or reception can be performed, and/or TWT wake interval (e.g., 413-a, 413-b in FIG. 4A) indicating the interval between two consecutive time points of activating data transmission and/or reception, and may transmit a signal including the TWT parameters (e.g., TWT setup request signal) to the external electronic device 320.

The processor 620 may identify beacon related information including information indicating the target beacon transmission time (TBTT) (e.g., 421-a, 421-b, 421-c, 421-d in FIG. 4B) of a beacon to be transmitted through a specific link (e.g., second link 332), and/or information indicating the beacon transmission periodicity (e.g., 422-a, 422-b, 422-c in FIG. 4B). The information indicating the target beacon transmission time and/or the information indicating the beacon transmission periodicity may be stored in the memory (e.g., memory 130 in FIG. 1) of the external electronic device 320.

The processor 620 may modify (or change) the TWT parameters transmitted by the electronic device 310 based on the beacon-related information. The processor 620 may change the TWT parameters so that the TWT duration includes the TBTT of a beacon transmitted through at least one link (e.g., second link 332) among the plural links 331 and 332.

As part of the operation of generating (or changing) the TWT parameters, the processor 620 may set the TWT wake interval included in the TWT parameters to one of the divisors of the beacon reception periodicity. When setting the TWT wake interval (e.g., 20ms) to one of the divisors of the beacon reception periodicity (e.g., 160ms), the processor 620 may receive a beacon in at least one TWT duration among plural TWT durations (e.g., 8 TWT durations). Hence, the electronic device 310 does not have to switch the communication circuit 510 to the activated state for a specified time other than the TWT duration to receive a beacon.

The processor 620 may select a divisor with the smallest difference from the TWT wake interval among the divisors of the beacon reception periodicity, and set the selected divisor as the TWT wake interval.

The processor 620 may select one of the divisors according to the characteristics of the service used by the electronic device 310 (e.g., a service requiring low latency, or a service requiring transmission or reception of relatively large amount of data), and set the selected divisor as the TWT wake interval.

As part of the operation of changing the TWT parameters, the processor 620 may set the start time of the TWT duration included in the TWT parameters based on the TBTT included in a beacon. The processor 620 may set the start time of the TWT duration so that a beacon can be received within the TWT duration based on the start time of the TWT duration and the length of the TWT duration.

Taking into account the delay time in reception of a beacon resulting from the link through which the beacon is transmitted being occupied by another external electronic device 104, the processor 620 may set the start time of the TWT duration and/or the TWT wake interval so that the end time of the TWT duration and the TBTT are greater than or equal to (or exceed) a specified length.

The processor 620 may control the communication circuit 610 to transmit the TWT parameters changed in the above-described way to the electronic device 310. The processor 620 may control the communication circuit 610 to transmit a signal including the changed TWT parameters through a link used for beacon transmission or a link other than the link used for beacon transmission.

The processor 620 may perform TWT negotiation for other links based on the TWT parameters corresponding to the link used for beacon transmission. For TWT negotiation as to other links, a signal including changed TWT parameters may include information indicating whether the changed TWT parameters apply to all links or information indicating the link to which the changed TWT parameters apply. Based on the information indicating whether the changed TWT parameters apply to all links, the electronic device 310 and the external electronic device 320 may set the TWT function for another link (e.g., first link 311).

The processor 620 may control the communication circuit 610 based on the changed TWT parameters. According to an embodiment, the processor 620 may control the communication circuit 610 to transmit data to the electronic device 310 for the TWT duration included in the changed TWT parameters.

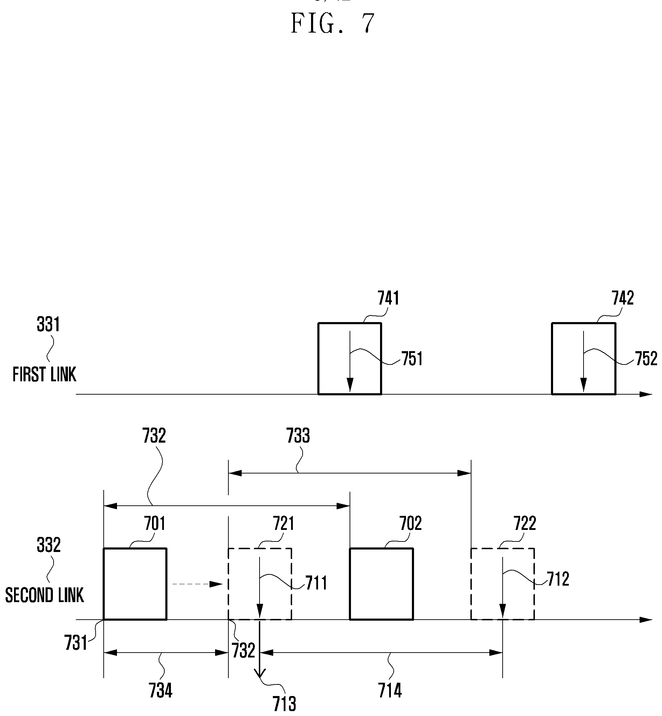

FIG. 7 is a diagram illustrating an embodiment in which the electronic device generates and/or changes TWT parameters according to various embodiments of the disclosure.

To support the target wake time (TWT) function, the electronic device (e.g., electronic device 310 in FIG. 5) may perform TWT negotiation with the external electronic device (e.g., external electronic device 320 in FIG. 6). The electronic device 310 may generate TWT parameters during the TWT negotiation process. According to an embodiment, the electronic device 310 may generate TWT parameters based on the state of the electronic device 310. The state of the electronic device 310 may include at least one of the size of data (or traffic) to be transmitted or received by the electronic device 310, quality-of-service (QoS) requirements, or a contention level of at least one link among the multiple links. The electronic device 310 may generate TWT parameters including at least one of target wake time 731 indicating the time point of activating data transmission and/or reception, TWT duration 701 or 702 indicating a period in which data transmission and/or reception can be performed, and/or TWT wake interval 732 indicating the interval between two consecutive time points of activating data transmission and/or reception.

The electronic device 310 may receive a beacon (not shown) broadcast (or, transmitted) by the external electronic device 320 before or after generating TWT parameters. The electronic device 310 may receive a beacon through at least one link (e.g., second link 332) among the plural links 331 and 332.

According to an embodiment, a beacon may include information indicating the target beacon transmission time (TBTT) 713 of a next beacon 711 to be transmitted, and/or information indicating the beacon transmission periodicity 714.

The electronic device 310 may modify (or change) the generated TWT parameters based on beacon-related information included in a beacon. The electronic device 310 may change the TWT parameters so that the TWT duration includes the TBTT 713 of a beacon 711 transmitted through at least one link (e.g., second link 332) among the plural links 331 and 332. Alternatively, in generating TWT parameters, the electronic device 310 may generate the TWT parameters based on information related to the beacon.

As part of the operation of generating (or changing) the TWT parameters, the electronic device 310 may set the TWT wake interval 732 included in the TWT parameters to one of the divisors of the beacon reception periodicity 714. When setting the TWT wake interval 732 (e.g., 20ms) to one of the divisors of the beacon reception periodicity 714 (e.g., 160ms), the electronic device 310 may receive a beacon 711 or 712 in at least one TWT duration 721 or 722 among plural TWT durations (e.g., 8 TWT durations). Hence, the electronic device 310 does not have to switch the communication circuit 510 to the activated state for a specified time other than the TWT duration 721 or 722 to receive a beacon 711 or 712.

The electronic device 310 may select a divisor with the smallest difference from the TWT wake interval 732 among the divisors of the beacon reception periodicity, and set the selected divisor as the TWT wake interval 733.

The electronic device 310 may select one of the divisors according to the characteristics of the service used by the electronic device 310 (e.g., a service requiring low latency, or a service requiring transmission or reception of relatively large amount of data), and set the selected divisor as the TWT wake interval.

As part of the operation of generating (or changing) the TWT parameters, the electronic device 310 may set the start time 732 of the TWT duration 721 included in the TWT parameters based on the TBTT 713 included in a beacon. The electronic device 310 may set (or change) the start time 732 of the TWT duration 721 so that a beacon 711 can be received within the TWT duration 721 based on the start time 732 of the TWT duration 721 and the length of the TWT duration 721. According to an embodiment, the electronic device 310 may determine a change amount 734 in the start time 731 of the TWT duration 721 so that a beacon 711 can be received within the TWT duration 721, and may set (or change) the start time 732 of the TWT duration 721 based on the previous start time 731 and change amount 734.

The external electronic device 320 may set different TBTTs for the plural links. The electronic device 310 may configure the TWT parameters so that the TBTT 713 of a beacon 711 or 712 transmitted through a specific link (e.g., second link 332) is included in the TWT duration 721 or 722, and a different electronic device 104 connected to the external electronic device 320 may configure the TWT parameters so that the TBTT of a beacon 751 or 752 transmitted through another link (e.g., first link 331) is included in the TWT duration 741 or 742. Through the above scheme, the electronic device 310 and/or another electronic device 104 connected to the external electronic device 320 can transmit or receive data to or from the external electronic device 320 at different times, so that the contention level can be lowered.

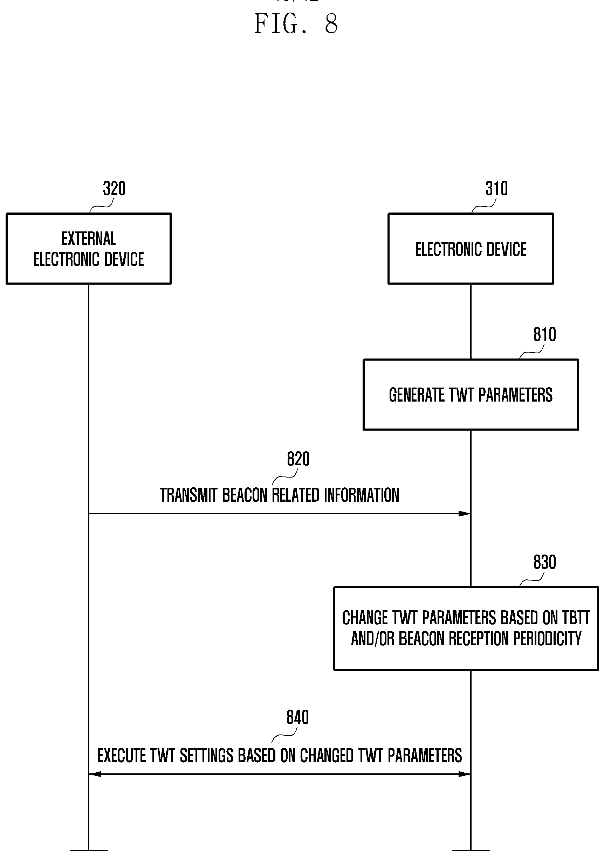

FIG. 8 is a sequence diagram illustrating an operation method of the electronic device according to various embodiments of the disclosure.

The electronic device (e.g., electronic device 310 in FIG. 5) may generate target wake time (TWT) parameters at operation 810.

To support the target wake time (TWT) function, the electronic device 310 may perform TWT negotiation with the external electronic device (e.g., external electronic device 320 in FIG. 3). The processor 520 may generate TWT parameters during the TWT negotiation process. According to an embodiment, the electronic device 310 may generate TWT parameters based on the state of the electronic device 310. The state of the electronic device 310 may include at least one of the size of data (or traffic) to be transmitted or received by the electronic device 310, quality-of-service (QoS) requirements, or a contention level of at least one link among the multiple links. The electronic device 310 may generate TWT parameters including at least one of target wake time (e.g., 411 in FIG. 4A) indicating the time point of activating data transmission and/or reception, TWT duration (e.g., 412-a, 412-b, 412-c in FIG. 4A) indicating a period in which data transmission and/or reception can be performed, and/or TWT wake interval (e.g., 413-a, 413-b in FIG. 4A) indicating the interval between two consecutive time points of activating data transmission and/or reception.

For example, to provide a service that requires relatively high-capacity data transmission and relatively low latency, the electronic device 310 may generate a TWT duration with a relatively long length and/or a TWT wake interval with a relatively short length. Or, to provide a service that does not require relatively high-capacity data transmission and relatively low latency, the electronic device 310 may generate a TWT duration with a relatively short length and/or a TWT wake interval with a relatively long length.

The external electronic device 320 may transmit beacon related information at operation 820.

The electronic device 310 may receive a beacon broadcast (or, transmitted) by the external electronic device 320 before or after generating TWT parameters. The electronic device 310 may receive a beacon through at least one link (e.g., second link 332) among the plural links 331 and 332. A beacon may include beacon related information.

In FIG. 8, the electronic device 310 is depicted as receiving a beacon after generating the TWT parameters (operation 810), but the electronic device 310 may receive a beacon and identify beacon related information before generating TWT parameters.

According to an embodiment, a beacon may include information necessary to achieve time synchronization between the electronic device 310 and the external electronic device 320. The electronic device 310 may perform time synchronization with the external electronic device 320 based on beacons.

According to an embodiment, a beacon may include information indicating the presence of data (e.g., IP data) to be transmitted by the external electronic device 320, and/or a traffic indication map (TIM) being information indicating the destination of data (e.g., electronic device 310). The electronic device 310 may identify whether there is data to be transmitted by the external electronic device 320 based on a received beacon, and may determine whether to activate the communication circuit 510 based on the presence of data.

According to various embodiments of the disclosure, beacons may be broadcast (or transmitted) through at least some or all of the plural links. A beacon may include not only information related to a specific link (e.g., first link 331) carrying the beacon but also information related to another link (e.g., second link 332).

For example, a beacon transmitted through the first link 331 may include time synchronization information related to the first link 331 and time synchronization information related to the second link 332. A beacon transmitted through the second link 332 may include time synchronization information related to the first link 331 and time synchronization information related to the second link 332.

As another example, a beacon transmitted through the first link 331 may include information indicating presence of data to be transmitted through the first link 331 and information indicating presence of data to be transmitted through the second link 332.

The electronic device 310 may receive beacons broadcast through at least some of the plural links and execute settings of other links through which beacons have not been received based on the received beacons.

According to an embodiment, a beacon may include information indicating the target beacon transmission time (TBTT) (e.g., 421-a, 421-b, 421-c, 421-d in FIG. 4B) of a next beacon to be transmitted, and/or information indicating the beacon transmission periodicity (e.g., 422-a, 422-b, 422-c in FIG. 4B).

The electronic device 310 may change the TWT parameters based on the target beacon transmission time (TBTT) and/or the beacon reception periodicity included in the beacon related information at operation 830.

The electronic device 310 may modify (or change) the generated TWT parameters based on beacon-related information included in a beacon. The electronic device 310 may change the TWT parameters so that the TWT duration includes the TBTT of a beacon transmitted through at least one link (e.g., second link 332) among the plural links 331 and 332. Alternatively, in generating TWT parameters, the electronic device 310 may generate the TWT parameters based on the beacon related information.

As part of the operation of generating (or changing) the TWT parameters, the electronic device 310 may set the TWT wake interval included in the TWT parameters to one of the divisors of the beacon reception periodicity. When setting the TWT wake interval (e.g., 20ms) to one of the divisors of the beacon reception periodicity (e.g., 160ms), the processor 520 may receive a beacon in at least one TWT duration among plural TWT durations (e.g., 8 TWT durations). Hence, the electronic device 310 does not have to switch the communication circuit 510 to the activated state for a specified time other than the TWT duration to receive a beacon.

The electronic device 310 may select a divisor with the smallest difference from the TWT wake interval among the divisors of the beacon reception periodicity, and set the selected divisor as the TWT wake interval.

The electronic device 310 may select one of the divisors according to the characteristics of the service used by the electronic device 310 (e.g., a service requiring low latency, or a service requiring transmission or reception of relatively large amount of data), and set the selected divisor as the TWT wake interval.

As part of the operation of generating (or changing) the TWT parameters, the electronic device 310 may set the start time of the TWT duration included in the TWT parameters based on the TBTT included in a beacon. The electronic device 310 may set the start time of the TWT duration so that a beacon can be received within the TWT duration based on the start time of the TWT duration and the length of the TWT duration.

Taking into account the delay time in reception of a beacon resulting from the link through which the beacon is transmitted being occupied by another external electronic device (e.g., electronic device 104 in FIG. 1), the electronic device 310 may set the start time of the TWT duration and/or the TWT wake interval so that the end time of the TWT duration and the TBTT are greater than or equal to (or exceed) a specified length.

The electronic device 310 may execute TWT settings based on the changed TWT parameters at operation 840.

As part of the operation of executing TWT settings, the electronic device 310 may control the communication circuit 510 to transmit the TWT parameters changed in the above-described way to the external electronic device 320. The electronic device 310 may transmit a signal including the changed TWT parameters through a link used for beacon transmission or a link other than the link used for beacon transmission.

The electronic device 310 may perform TWT negotiation for other links based on the TWT parameters corresponding to the link used for beacon transmission. For TWT negotiation as to other links, a signal including changed TWT parameters may include information indicating whether the changed TWT parameters apply to all links or information indicating the link to which the changed TWT parameters apply.

The electronic device 310 may control the communication circuit 510 based on the changed TWT parameters. The electronic device 310 may control the communication circuit 510 so that the communication circuit 510 is activated before the start time of the TWT duration included in the changed TWT parameters. The electronic device 310 may control the communication circuit 510 so that the communication circuit 510 is activated every TWT interval included in the changed TWT parameters.

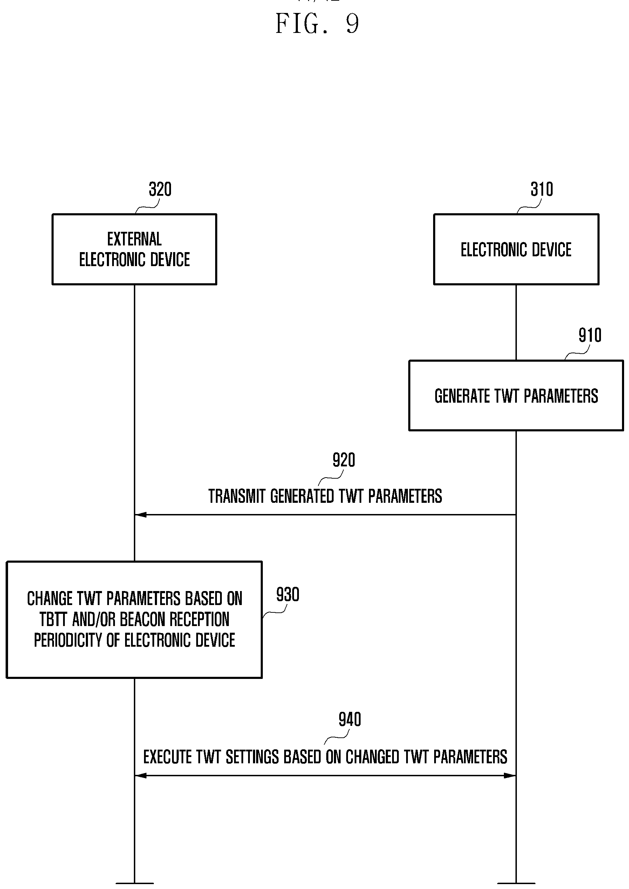

FIG. 9 is a sequence diagram illustrating an operation method of the electronic device according to various embodiments of the disclosure.

The electronic device (e.g., electronic device 310 in FIG. 5) may generate target wake time (TWT) parameters at operation 910.

To support the target wake time (TWT) function, the electronic device 310 may perform TWT negotiation with the external electronic device (e.g., external electronic device 320 in FIG. 3). The processor 520 may generate TWT parameters during the TWT negotiation process. According to an embodiment, the electronic device 310 may generate TWT parameters based on the state of the electronic device 310. The state of the electronic device 310 may include at least one of the size of data (or traffic) to be transmitted or received by the electronic device 310, quality-of-service (QoS) requirements, or a contention level of at least one link among the multiple links. The electronic device 310 may generate TWT parameters including at least one of target wake time (e.g., 411 in FIG. 4A) indicating the time point of activating data transmission and/or reception, TWT duration (e.g., 412-a, 412-b, 412-c in FIG. 4A) indicating a period in which data transmission and/or reception can be performed, or TWT wake interval (e.g., 413-a, 413-b in FIG. 4A) indicating the interval between two consecutive time points of activating data transmission and/or reception.

For example, to provide a service that requires relatively high-capacity data transmission and relatively low latency, the electronic device 310 may generate a TWT duration with a relatively long length and/or a TWT wake interval with a relatively short length. Or, to provide a service that does not require relatively high-capacity data transmission and relatively low latency, the electronic device 310 may generate a TWT duration with a relatively short length and/or a TWT wake interval with a relatively long length.

The electronic device 310 may transmit the generated TWT parameters to the external electronic device 320 at operation 920.

The electronic device 310 may set a beacon reception periodicity to be greater than the beacon transmission periodicity based on information related to the beacon transmission periodicity received from the external electronic device 320. Information related to the beacon transmission periodicity may be included in a beacon broadcast by the external electronic device 320. The beacon reception periodicity may be a multiple of the beacon transmission periodicity.

The electronic device 310 may transmit information indicating the beacon reception periodicity to the external electronic device 320 along with the generated TWT parameters.

The external electronic device 320 may change the TWT parameters based on the TBTT and/or the beacon reception periodicity of the electronic device at operation 930.

The external electronic device 320 may identify beacon related information including information indicating the target beacon transmission time (TBTT) (e.g., 421-a, 421-b, 421-c, 421-d in FIG. 4B) of a beacon to be transmitted through a specific link (e.g., second link 332), and/or information indicating the beacon transmission periodicity (e.g., 422-a, 422-b, 422-c in FIG. 4B). The information indicating the target beacon transmission time and/or the information indicating the beacon transmission periodicity may be stored in the memory (e.g., memory 130 in FIG. 1) of the external electronic device 320.

The external electronic device 320 may modify (or change) the TWT parameters transmitted by the electronic device 310 based on the beacon-related information. The external electronic device 320 may change the TWT parameters so that the TWT duration includes the TBTT of a beacon transmitted through at least one link (e.g., second link 332) among the plural links 331 and 332.

As part of the operation of generating (or changing) the TWT parameters, the external electronic device 320 may set the TWT wake interval included in the TWT parameters to one of the divisors of the beacon reception periodicity. When setting the TWT wake interval (e.g., 20ms) to one of the divisors of the beacon reception periodicity (e.g., 160ms), the processor 620 may receive a beacon in at least one TWT duration among plural TWT durations (e.g., 8 TWT durations). Hence, the electronic device 310 does not have to switch the communication circuit 510 to the activated state for a specified time other than the TWT duration to receive a beacon.

The external electronic device 320 may select a divisor with the smallest difference from the TWT wake interval among the divisors of the beacon reception periodicity, and set the selected divisor as the TWT wake interval.

The external electronic device 320 may select one of the divisors according to the characteristics of the service used by the electronic device 310 (e.g., a service requiring low latency, or a service requiring transmission or reception of relatively large amount of data), and set the selected divisor as the TWT wake interval.

As part of the operation of changing the TWT parameters, the external electronic device 320 may set the start time of the TWT duration included in the TWT parameters based on the TBTT included in a beacon. The processor 620 may set the start time of the TWT duration so that a beacon can be received within the TWT duration based on the start time of the TWT duration and the length of the TWT duration.

Taking into account the delay time in reception of a beacon resulting from the link through which the beacon is transmitted being occupied by another external electronic device 104, the external electronic device 320 may set the start time of the TWT duration and/or the TWT wake interval so that the end time of the TWT duration and the TBTT are greater than or equal to (or exceed) a specified length.

The external electronic device 320 and the electronic device 310 may execute TWT settings based on the changed TWT parameters at operation 940.

The external electronic device 320 may control the communication circuit 610 to transmit the TWT parameters changed in the above-described way to the electronic device 310. The external electronic device 320 may control the communication circuit 610 to transmit a signal including the changed TWT parameters through a link used for beacon transmission or a link other than the link used for beacon transmission.

The external electronic device 320 may perform TWT negotiation for other links based on the TWT parameters corresponding to the link used for beacon transmission. For TWT negotiation as to other links, a signal including changed TWT parameters may include information indicating whether the changed TWT parameters apply to all links or information indicating the link to which the changed TWT parameters apply. Based on the information indicating whether the changed TWT parameters apply to all links, the electronic device 310 and the external electronic device 320 may set the TWT function for another link (e.g., first link 311).

The external electronic device 320 may control the communication circuit 610 based on the changed TWT parameters. According to an embodiment, the external electronic device 320 may control the communication circuit 610 to transmit or receive data to or from the electronic device 310 for the TWT duration included in the changed TWT parameters.

According to various embodiments of the disclosure, an electronic device may include: a communication circuit that transmits or receives data through multiple links established between an external electronic device and the electronic device; and a processor operably connected to the communication circuit, wherein the processor may be configured to receive a signal including a target beacon transmission time (TBTT) of a beacon to be received through at least one link among the multiple links and beacon transmission interval information from the external electronic device, generate and/or change target wake time (TWT) parameters based on the TBTT and/or the beacon transmission interval, and control the communication circuit based on the generated and/or changed TWT parameters.

In the electronic device according to various embodiments of the disclosure, the processor may be configured to generate and/or change the TWT parameters so that a beacon can be received through at least one link of the multiple links while the communication circuit is activated.

In the electronic device according to various embodiments of the disclosure, as part of the operation of generating and/or changing the TWT parameters, the processor may be configured to set a TWT interval to one of divisors of a beacon reception periodicity.

In the electronic device according to various embodiments of the disclosure, the processor may be configured to select one of divisors of the beacon reception periodicity according to the characteristics of the service provided by the electronic device, and set the selected divisor as the TWT interval.

In the electronic device according to various embodiments of the disclosure, as part of the operation of generating and/or changing the TWT parameters, the processor may be configured to set the TWT start time based on the TBTT of a beacon.

In the electronic device according to various embodiments of the disclosure, the reception times of beacons received through the multiple links may be different for the individual links.

In the electronic device according to various embodiments of the disclosure, the processor may be configured to execute settings of the multiple links based on the generated and/or changed TWT parameters.

According to various embodiments of the disclosure, an electronic device may include: a communication circuit that transmits or receives data through multiple links established between an external electronic device and the electronic device; and a processor operably connected to the communication circuit, wherein the processor may be configured to receive TWT parameters related to a target wake time (TWT) of the external electronic device from the external electronic device through at least one link among the multiple links, identify a target beacon transmission time (TBTT) of a beacon to be received through at least one link among the multiple links and beacon interval information, generate and/or change the received TWT parameters based on the TBTT and/or the beacon interval, and control the communication circuit to transmit the generated and/or changed TWT parameters to the external electronic device.

In the electronic device according to various embodiments of the disclosure, the processor may be configured to change the TWT parameters so that a beacon can be received through at least one link of the multiple links while a communication circuit of the external electronic device is activated.

In the electronic device according to various embodiments of the disclosure, as part of the operation of generating and/or changing the TWT parameters, the processor may be configured to set a TWT interval to one of divisors of a beacon reception periodicity.

In the electronic device according to various embodiments of the disclosure, the processor may be configured to select one of divisors of the beacon reception periodicity according to the characteristics of the service provided by the external electronic device, and set the selected divisor as the TWT interval.

In the electronic device according to various embodiments of the disclosure, as part of the operation of generating and/or changing the TWT parameters, the processor may be configured to set the TWT start time based on the TBTT of a beacon.

In the electronic device according to various embodiments of the disclosure, the transmission times of beacons to be received through the multiple links may be different for the individual links.

In the electronic device according to various embodiments of the disclosure, the processor may be configured to execute settings of the multiple links based on the changed TWT parameters.

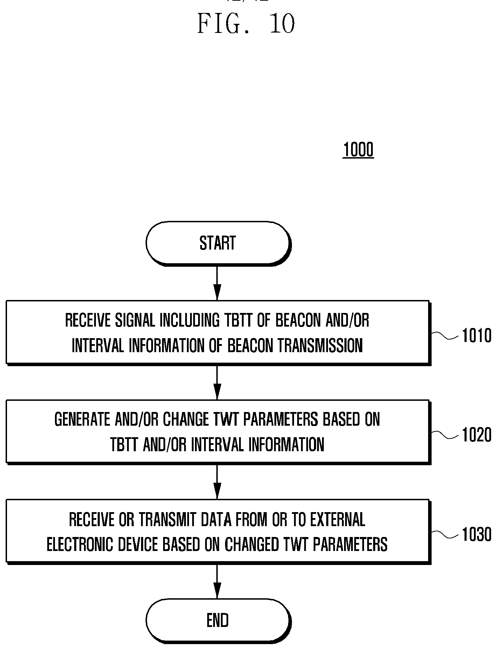

FIG. 10 is an operational flowchart illustrating an operation method 1000 of the electronic device according to various embodiments of the disclosure.

The electronic device (e.g., electronic device 310 in FIG. 5) may receive a signal including the TBTT of a beacon and/or interval information of beacon transmission at operation 1010.

The electronic device 310 may receive a beacon broadcast (or, transmitted) by the external electronic device 320 before or after generating TWT parameters. For example, the electronic device 301 may receive a beacon broadcast (or, transmitted) by the external electronic device 320 before negotiating TWT parameters with the external electronic device 320. The electronic device 310 may receive a beacon through at least one link (e.g., second link 332) among the plural links 331 and 332. A beacon may include beacon related information.

In FIG. 8, the electronic device 310 is depicted as receiving a beacon after generating TWT parameters (operation 810), but the electronic device 310 may receive a beacon and identify beacon related information before generating TWT parameters.

According to an embodiment, a beacon may include information necessary to achieve time synchronization between the electronic device 310 and the external electronic device 320. The electronic device 310 may perform time synchronization with the external electronic device 320 based on beacons.

According to an embodiment, a beacon may include information indicating the presence of data (e.g., IP data) to be transmitted by the external electronic device 320, and/or a traffic indication map (TIM) being information indicating the destination of data (e.g., electronic device 310). The electronic device 310 may identify whether there is data to be transmitted by the external electronic device 320 based on a received beacon, and may determine whether to activate the communication circuit 510 based on the presence of data.

According to various embodiments of the disclosure, beacons may be broadcast (or transmitted) through at least some or all of the plural links. A beacon may include not only information related to a specific link (e.g., first link 331) carrying the beacon but also information related to another link (e.g., second link 332).

For example, a beacon transmitted through the first link 331 may include time synchronization information related to the first link 331 and time synchronization information related to the second link 332. A beacon transmitted through the second link 332 may include time synchronization information related to the first link 331 and time synchronization information related to the second link 332.

As another example, a beacon transmitted through the first link 331 may include information indicating presence of data to be transmitted through the first link 331 and information indicating presence of data to be transmitted through the second link 332.

The electronic device 310 may receive beacons broadcast through at least some of the plural links and execute settings of other links through which beacons have not been received based on the received beacons.

According to an embodiment, a beacon may include information indicating the target beacon transmission time (TBTT) (e.g., 421-a, 421-b, 421-c, 421-d inFIG. 4B) of a next beacon to be transmitted, and/or information indicating the beacon transmission periodicity (e.g., 422-a, 422-b, 422-c in FIG. 4B).

The signal received at operation 1010 may be a beacon signal or a probe response message.

The electronic device 310 may generate and/or change the TWT parameters based on the TBTT and/or interval information at operation 1020.

The electronic device 310 may modify (or change) the generated TWT parameters based on beacon-related information included in a beacon. The electronic device 310 may change the TWT parameters so that the TWT duration includes the TBTT of a beacon transmitted through at least one link (e.g., second link 332) among the plural links 331 and 332. Alternatively, in generating TWT parameters, the electronic device 310 may generate the TWT parameters based on the beacon related information.

As part of the operation of generating (or changing) the TWT parameters, the electronic device 310 may set the TWT wake interval included in the TWT parameters to one of the divisors of the beacon reception periodicity. When setting the TWT wake interval (e.g., 20ms) to one of the divisors of the beacon reception periodicity (e.g., 160ms), the processor 520 may receive a beacon in at least one TWT duration among plural TWT durations (e.g., 8 TWT durations). Hence, the electronic device 310 does not have to switch the communication circuit 510 to the activated state for a specified time other than the TWT duration to receive a beacon.

The electronic device 310 may select a divisor with the smallest difference from the TWT wake interval among the divisors of the beacon reception periodicity, and set the selected divisor as the TWT wake interval.

The electronic device 310 may select one of the divisors according to the characteristics of the service used by the electronic device 310 (e.g., a service requiring low latency, or a service requiring transmission or reception of relatively large amount of data), and set the selected divisor as the TWT wake interval.

As part of the operation of generating (or changing) the TWT parameters, the electronic device 310 may set the start time of the TWT duration included in the TWT parameters based on the TBTT included in a beacon. The electronic device 310 may set the start time of the TWT duration so that a beacon can be received within the TWT duration based on the start time of the TWT duration and the length of the TWT duration.

Taking into account the delay time in reception of a beacon resulting from the link through which the beacon is transmitted being occupied by another external electronic device (e.g., electronic device 104 in FIG. 1), the electronic device 310 may set the start time of the TWT duration and/or the TWT wake interval so that the end time of the TWT duration and the TBTT are greater than or equal to (or exceed) a specified length.

The electronic device 310 may receive or transmit data from or to the external electronic device 320 based on the changed TWT parameters at operation 1030.

As part of the operation of executing TWT settings, the electronic device 310 may control the communication circuit 510 to transmit the TWT parameters changed in the above-described way to the external electronic device 320. The electronic device 310 may transmit a signal including the changed TWT parameters through a link used for beacon transmission or a link other than the link used for beacon transmission.

The electronic device 310 may perform TWT negotiation for other links based on the TWT parameters corresponding to the link used for beacon transmission. For TWT negotiation as to other links, a signal including changed TWT parameters may include information indicating whether the changed TWT parameters apply to all links or information indicating the link to which the changed TWT parameters apply.

The electronic device 310 may control the communication circuit 510 based on the changed TWT parameters. The electronic device 310 may control the communication circuit 510 so that the communication circuit 510 is activated before the start time of the TWT duration included in the changed TWT parameters. The electronic device 310 may control the communication circuit 510 so that the communication circuit 510 is activated every TWT interval included in the changed TWT parameters.

According to various embodiments of the disclosure, an operation method of an electronic device may include: receiving, from an external electronic device, a signal including a target beacon transmission time (TBTT) of a beacon to be received through at least one link among multiple links established between the external electronic device and the electronic device and beacon transmission interval information; generating and/or changing target wake time (TWT) parameters based on the TBTT and/or the beacon transmission interval; and receiving or transmitting data from or to the external electronic device based on the generated and/or changed TWT parameters.

In the operation method of the electronic device according to various embodiments of the disclosure, generating and/or changing TWT parameters may include generating and/or changing the TWT parameters so that a beacon can be received through at least one link of the multiple links while a communication circuit of the electronic device is activated.

In the operation method of the electronic device according to various embodiments of the disclosure, generating and/or changing TWT parameters may include setting a TWT interval included in the TWT parameters to one of divisors of a beacon reception periodicity.

In the operation method of the electronic device according to various embodiments of the disclosure, generating and/or changing TWT parameters may further include: selecting one of divisors of the beacon reception periodicity according to the characteristics of the service provided by the electronic device; and setting the selected divisor as the TWT interval.

In the operation method of the electronic device according to various embodiments of the disclosure, generating and/or changing TWT parameters may include setting the TWT start time included in the TWT parameters based on the TBTT of a beacon.

In the operation method of the electronic device according to various embodiments of the disclosure, the reception times of beacons received through the multiple links may be different for the individual links.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and " at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication circuit that transmits or receives data through multiple links established between an external electronic device and the electronic device; and
a processor operably connected to the communication circuit,
wherein the processor is configured to receive a signal including information about a target beacon transmission time (TBTT) of a beacon to be received through at least one link among the multiple links and a beacon interval from the external electronic device, generate and/or change target wake time (TWT) parameters based on the TBTT and/or the beacon interval, and control the communication circuit based on the generated and/or changed TWT parameters.

2. The electronic device of claim 1, wherein the processor is configured to generate and/or change the TWT parameters in a manner that a beacon can be received through at least one link among the multiple links while the communication circuit is activated.

3. The electronic device of claim 1, wherein, as part of an operation of generating and/or changing the TWT parameters, the processor is configured to set a TWT interval to one of divisors of a beacon reception periodicity.

4. The electronic device of claim 3, wherein the processor is configured to select one of the divisors of the beacon reception periodicity according to characteristics of a service provided by the electronic device, and set the selected divisor as the TWT interval.

5. The electronic device of claim 1, wherein, as part of an operation of generating and/or changing the TWT parameters, the processor is configured to set a TWT start time based on the TBTT of a beacon.

6. The electronic device of claim 1, wherein reception times of beacons received through the multiple links are different for the individual links.

7. The electronic device of claim 1, wherein the processor is configured to execute settings of the multiple links based on the generated and/or changed TWT parameters.

8. An operation method of an electronic device, the method comprising:
receiving, from an external electronic device, a signal including information about a target beacon transmission time (TBTT) of a beacon to be received through at least one link among multiple links established between the external electronic device and the electronic device and a beacon transmission interval;
generating and/or changing target wake time (TWT) parameters based on the TBTT and/or the beacon transmission interval; and
receiving or transmitting data from or to the external electronic device based on the generated and/or changed TWT parameters.

9. The operation method of claim 8, wherein generating and/or changing TWT parameters comprises generating and/or changing the TWT parameters in a manner that a beacon can be received through at least one link among the multiple links while a communication circuit of the electronic device is activated.

10. The operation method of claim 8, wherein generating and/or changing TWT parameters comprises setting a TWT interval included in the TWT parameters to one of divisors of a beacon reception periodicity.

11. The operation method of claim 10, wherein generating and/or changing TWT parameters further includes:
selecting one of the divisors of the beacon reception periodicity according to characteristics of a service provided by the electronic device; and
setting the selected divisor as the TWT interval.

12. The operation method of claim 8, wherein generating and/or changing TWT parameters comprises setting a TWT start time included in the TWT parameters based on the TBTT of a beacon.

13. The operation method of claim 8, wherein reception times of beacons received through the multiple links are different for the individual links.
